(19) Europäisches Patentamt

European Patent Office

Office européen des brevets

(11) Veröffentlichungsnummer : **0 486 554 B1**

(12) **EUROPÄISCHE PATENTSCHRIFT**

(45) Veröffentlichungstag der Patentschrift :
26.10.94 Patentblatt 94/43

(51) Int. Cl.⁵ : **H04L 27/22**

(21) Anmeldenummer : **90912008.1**

(22) Anmeldetag : **08.08.90**

(86) Internationale Anmeldenummer :
**PCT/EP90/01305**

(87) Internationale Veröffentlichungsnummer :
**WO 91/02421 21.02.91 Gazette 91/05**

(54) **VERFAHREN UND VORRICHTUNG ZUM UMSETZEN DIGITAL MODULIERTER EMPFANGSSIGNALE AUS DEM HOCHFREQUENZBEREICH.**

(30) Priorität : **11.08.89 AT 1923/89**

(43) Veröffentlichungstag der Anmeldung :
**27.05.92 Patentblatt 92/22**

(45) Bekanntmachung des Hinweises auf die
Patenterteilung :
**26.10.94 Patentblatt 94/43**

(84) Benannte Vertragsstaaten :
**AT BE CH DE DK ES FR GB IT LI LU NL SE**

(56) Entgegenhaltungen :
**EP-A- 0 353 779**
**WO-A-86/03356**
**US-A- 4 888 793**
**Proceedings ISDSE-7, 7th International Conference on Digital Satellite Communications, München, DE, 12-16 Mai 1986, VDE-Verlag, (Berlin, DE); C.F. HOEBER et al.: "Bandwidth and power efficient satelleite TDMA demodulator", Seiten 573-578**

(73) Patentinhaber : **Siemens Aktiengesellschaft Österreich**
**Siemensstrasse 88 - 92**
**A-1210 Wien (AT)**

(84) **AT**
Patentinhaber : **SIEMENS AKTIENGESELLSCHAFT**
**Wittelsbacherplatz 2**
**D-80333 München (DE)**

(84) **BE CH DE DK ES FR GB IT LI LU NL SE**

(72) Erfinder : **SCHULTES, Gerhard**
**Waldstr. 78**
**A-2231 Strasshof (AT)**
Erfinder : **SCHOLTZ, Arpad, Ludwig**
**Amalienstr. 74/2/12/129**
**A-1130 Wien (AT)**
Erfinder : **BONEK, Ernst**
**Stinglgasse 18**
**A-1140 Wien (AT)**

**Beschreibung**

Die Erfindung betrifft ein Verfahren zum Umsetzen eines digital modulierten Empfangssignals aus dem Hochfrequenzbereich, wobei das als komplexer Vektor darstellbare Empfangssignal in mindestens einer Mischstufe inkohärent ins Basisband umgesetzt wird. Die Erfindung betrifft weiters einen Empfänger für digital modulierte Signale in einem mobilen Kommunikationssystem, dessen Antenne mit mindestens einer Mischstufe für das als komplexer Vektor darstellbare Empfangssignal verbunden ist, wobei der Mischstufe zwei Tiefpaßfilter nachgeordnet sind, die ausgangsseitig über je einen Analog/Digital-Wandler mit einem Umwerter verbunden sind.

Ein nach einem derartigen Verfahren arbeitender Empfänger ist aus der WO 86/3356 bekannt. Das Empfangssignal wird von zwei Mischern mit einem Lokaloszillator phasenrichtig und um 90° phasenverschoben umgesetzt. Tiefpaßfiltern und Analog-Digital/Wandlern ist ein digitales Filter nachgeschaltet. Die Decodierung der übertragenen Bits erfolgt mit einem als Umwerter arbeitenden ROM, dem ein Multiplexer nachgeschaltet ist (Fig. 17).

Ein Empfangsverfahren und ein Empfänger für Schnurlos-Telefone wird im Telcom Report 10 (1987), Heft 2, Seite 130 bis 137, beschrieben. Das Empfangssignal wird über eine Hochfrequenzstufe und mehrere Zwischenfrequenzstufen in das Basisband gemischt. Die Demodulation erfolgt mit PLL-Schaltung.

Im allgemeinen werden digital modulierte Signale durch synchrone oder, seltener, asynchrone Heterodynempfänger verarbeitet. Eine Spiegelfrequenzunterdrückung erfolgt in der Hochfrequenzstufe, die Hauptselektion in ein bis zwei Zwischenfrequenzstufen. Begrenzerverstärker oder Verstärkungsregelungen schaffen den notwendigen Ausgleich der Eingangsdynamik. Lineare Modulationsverfahren unterteilen sich in zweistufige Verfahren mit binärer Amplitudenmodulation (BAM) und binärem Phase-Shift-Keying (BPSK), vierstufige Verfahren mit Quadratur-Amplitudenmodulation (QAM) und Quadratur-Phase-Shift-Keying (QPSK), sowie mehrstufige Modifikationen. Als nichtlineare Modulationsverfahren sind FSK- oder frequenzmodulationsähnliche Verfahren, wie Minimum-Shift-Keying (MSK) und gaußgefiltertes Minimum-Shift-Keying (GMSK) gebräuchlich. Die Demodulation erfolgt für nichtlineare Modulationsverfahren mittels PLL, Costas-Loop oder Diskriminatoren. Für lineare Modulationsverfahren werden synchrone Quadraturdemodulatoren verwendet.

Der Erfindung liegt die Aufgabe zugrunde, die Verarbeitung zwei- und mehrstufig digital modulierter Signale mit einem Empfänger zu ermöglichen.

Dies wird gemäß Patentanspruch 1 dadurch erreicht, daß das Empfangssignal in einen zeit- und amplitudenkontinuierlichen Real- und Imaginärteil zerlegt wird, wobei die Phasendifferenz pro Bitdauer durch die inkohärente Umsetzung kleiner als die halbe, durch die Modulation pro Bit verursachte Phasenverschiebung gehalten wird, die Signalteile anschließend verstärkt, gefiltert und abgetastet werden, wobei innerhalb einer vorangehenden Synchronisationszeit der Abtastzeitpunkt bestimmt wird, anschließend die Abtastsignale digitalisiert und die Abtastwerte als binäres Zahlenpaar für Betrag und Winkel des Vektors umgewerter werden, wobei der Betragswert zur Verstärkungsregelung dient und aus der Differenz zweier aufeinanderfolgender Winkelwerte nach Klassierung Empfangsdaten rückgewonnen werden.

Durch eine homodyne Arbeitsweise wird das Auftreten einer Spiegelfrequenz vermieden. Die inkohärente Demodulation vermeidet aufwendige Trägersynchronisation und erlaubt gleichspannungsfreie Signalpfade. Die Phasendifferenz wird durch Frequenzkorrektur oder Oszillatoren mit exakter Frequenzkonstanz gering gehalten. Trotz der Verwendung nur einer Mischstufe sind mit diesem Empfangsverfahren fast alle zwei- und mehrstufigen, linearen und nichtlinearen Modulationsverfahren einsetzbar.

Eine effiziente Winkeldecodierung über 360° hinaus wird dadurch erreicht, daß ein Winkelwert über eine Bitdauer zwischengespeichert, von dem folgenden im Zweierkomplement subtrahiert und aus einer vom verwendeten Modulationsverfahren abhängigen Klassierung des Ergebnisses die Empfangsdaten rückgewonnen werden. Die Anpassung an das individuelle Modulationsverfahren erfolgt über eine programmierbare Einstellung der Klassierung, wodurch keine Schaltungsänderung notwendig wird.

Es ist vorteilhaft, daß der Abtastzeitpunkt für den Winkelwert eines linear modulierten Empfangssignals innerhalb einer Synchronisationszeit vor der Übertragung gültiger Daten dadurch ermittelt wird, daß der Verlauf des Betrags des Empfangssignals mit einer Synchronisationsfolge moduliert und nach Umsetzen ins Basisband die Vorzeichenfunktion gebildet und diese digital differenziert wird, wobei eine Nullstellenimpulsfolge gebildet, die zeitliche Lage der Impulse relativ zum Systemtakt gemessen und über mehrere Bits gemittelt wird. Aus der Drehung des Vektors des Empfangssignals wird eine Korrektur der Phasendifferenz durch inkohärente Umsetzung abgeleitet.

Weiters ist es vorteilhaft, daß der Abtastzeitpunkt für den Winkelwert eines nichtlinearen modulierten Empfangssignals innerhalb einer Synchronisationszeit vor der Übertragung gültiger Daten dadurch ermittelt wird, daß der mit der Synchronisationsfolge winkelmodulierte Träger nach Umsetzung ins Basisband überabgetastet

EP 0 486 554 B1

und daraus ein Phasenhub gewonnen wird, wobei aus diesem durch Differenzbildung über eine Bitdauer eine Phasendifferenz gebildet wird, deren Winkelvorzeichenfunktion phasenmäßig mit dem Datentakt verglichen und die Phasenverschiebung über mehrere Bits gemittelt wird.

Die Aufgabe der Erfindung wird gemäß Patentanspruch 5 auch dadurch gelöst, daß die Tiefpaßfilter mit regelbarer Verstärkung ausgestattet sind, daß der Umwerter Mittel zur Bestimmung von Betrag und Winkel des Vektors des Empfangssignals aus dessen Real- und Imaginärteil enthält und zur Empfangsdatenrückgewinnung mit einem Decoder verbunden ist, der einen Klassifikator enthält und daß eine Justiereinrichtung zur Ermittlung des Abtastzeitpunktes mit dem Umwerter und dem Decoder verbunden ist.

Durch die Umsetzung ins Basisband mit einer Mischstufe wird Hochfrequenz-Schaltungsaufwand eingespart. Nach der Hochfrequenz-Vorstufe sind die Schaltungskomponenten in Si-Bipolar- oder MOS-Technologie voll integrierbar. Es müssen keine Hochfrequenz- oder Zwischenfrequenz-Stufen mehr abgeglichen werden. Das Regelverhalten der digitalen Amplitudenregelung ist programmierbar und ohne Schaltungsänderung veränderbar. Durch die Tiefpaßfilter werden unerwünschte Signalkomponenten entfernt.

Es ist vorteilhaft, daß die Mischstufe als Quadraturdemodulator ausgebildet ist, der aus zwei Mischern besteht, die mit einem Lokaloszillator zur Speisung mit einem um 0°- und 90°-phasenverschobenen Oszillatorsignal verbunden sind und der Lokaloszillator einen Nachstimmeingang aufweist, der mit einer Offsetkorrektureinrichtung verbunden ist. Der Lokaloszillator ist mit dem Eingangssignal nicht phasenstarr gekoppelt, wodurch Schaltungsaufwand zur Synchronisation eingespart wird. Der Trägerfrequenz-Offset aus der Phasenverschiebung der Inkohärenz der Frequenz von Eingangssignal und Lokaloszillator wird über den Nachstimmeingang minimiert. Sein Wert ergibt sich bei der Ermittlung des Abtastzeitpunktes und muß nicht mehr zusetzlich berechnet werden.

Es ist vorteilhaft, daß der Verstärkungsfaktor der Tiefpaßfilter digital einstellbar und der Umwerter zu dieser Regelung mit den Tiefpaßfiltern rückgekoppelt ist. Zur Beseitigung von Gleichspannungsanteilen enthalten die Tiefpaßfilter Gleichspannungstrennkondensatoren. Sie wirken daher wie Bandpaßfilter mit einer Breite von mehreren Dekaden.

Zur Verringerung des Stromverbrauches und der Verarbeitung hoher Datenraten ist es vorteilhaft, daß der Umwerter aus zwei Permanentspeichern besteht, deren Datenadressen durch die Zahlenwerte für Real- und Imaginärteil der Abtastwerte gebildet sind und daß Betrags- und Winkelwert am Datenausgang des jeweiligen Permanentspeichers anliegen.

Um die Demodulation des Empfangssignals auf extrem hohe Frequenzen erweitern zu können ist es vorteilhaft, daß der Mischstufe mindestens ein Zwischenfrequenzumsetzer vorgeschaltet ist. Der Anwendungsbereich des Empfängers wird dadurch erweitert, daß er durch unterschiedliche Zwischenfrequenzumsetzer an unterschiedliche Empfangsfrequenzen anpaßbar ist.

Die Erfindung wird anhand zweier Ausführungsbeispiele und von Zeichnungen näher erläutert. Es zeigen:

Fig. 1    ein Blockschaltbild des ersten Ausführungsbeispieles,
Fig. 2    die Zeitstruktur des Empfangssignals,
Fig. 3    den Phasenverlauf bei Winkelmodulation zur Ermittlung des Abtastzeitpunktes und
Fig. 4    den Signalverlauf zur Emittlung des Abtastzeitpunktes bei linearen Modulationsverfahren,
Fig. 5    ein Blockschaltbild des zweiten Ausführungsbeispieles.

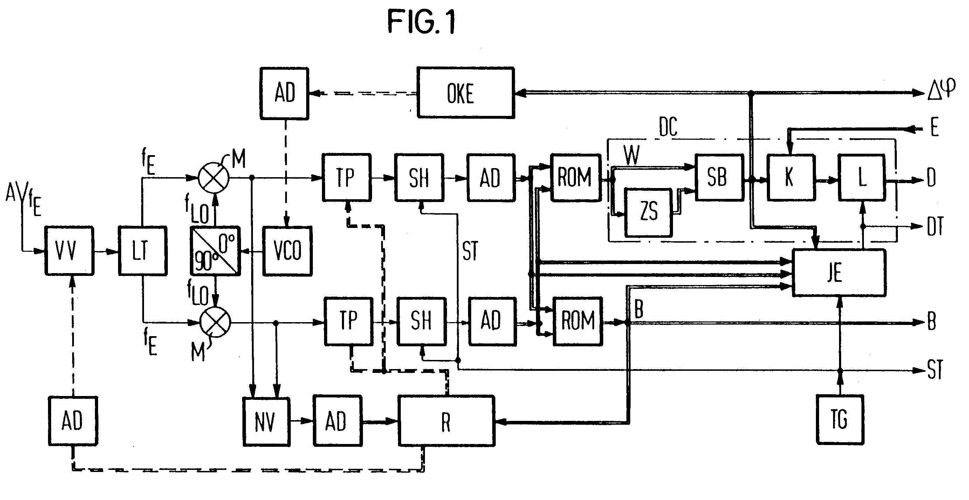

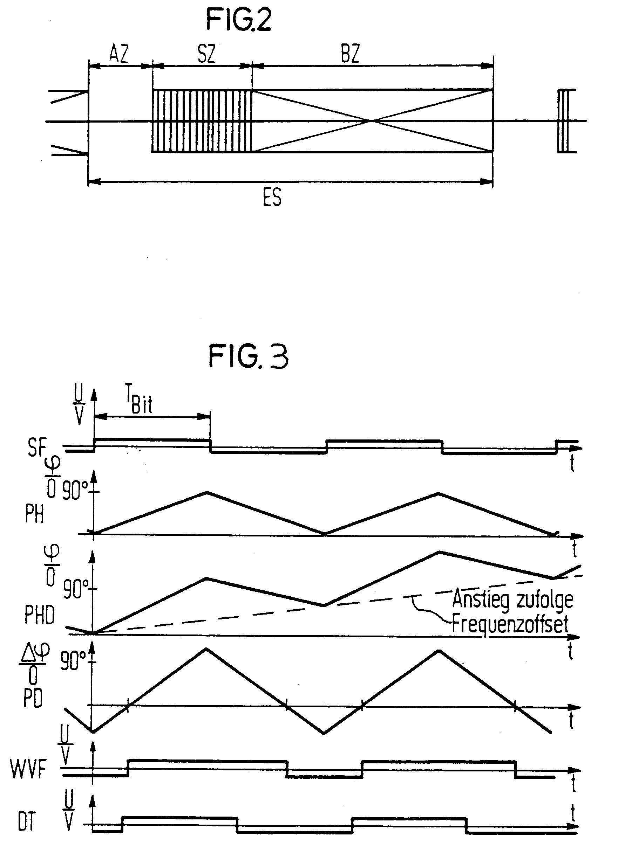

Das Blockschaltbild eines Empfängers für zwei- und vierstufig digital modulierte Signale zum Einsatz in mobilen Kommunikationssystemen ist in Fig. 1 dargestellt. Das erste Ausführungsbeispiel wird anhand dieser Fig. mit eingeschobener Erklärung der Figuren 2 - 4 und mit Tabellen erläutert. Es handelt sich um einen homodynen, inkohärenten, digitalen Vektorempfänger mit einer Mischstufe. Analoge Signalwege sind als einfacher Strich, digitale Datenwege als doppelter Strich gekennzeichnet. Die Regelzweige sind entsprechend strichliert.

Ein mit einer Antenne A verbundener Vorverstärker VV hebt den Eingangspegel rausch- und intermodulationsarm an und bewirkt gleichzeitig eine Entkopplung der Antenne A von den Eingängen der Mischstufe. Diese Hochfrequenz-Vorstufe enthält nur eine fixe, grobe Vorselektion des Eingangsfrequenzbereiches. Außerdem ist der Vorverstärker VV mit einer regelbaren Verstärkung ausgestattet, um einen teilweisen Eingangsdynamikausgleich zu ermöglichen.

In der Mischstufe wird das Eingangssignal in einem Schritt von der Empfangsfrequenz $f_E$, etwa 2 GHz, in ein Basisband umgesetzt. Um den vollen Informationsgehalt zu bewahren, muß das Empfangssignal in Real- und Imaginärteil zerlegt werden. Dies geschieht mittels eines Quadraturdemodulators, der aus einem Leistungsteiler LT und aus zwei gleichartigen Mischern M besteht, die mit einem 0°- und einem 90°-phasenverschobenen Signal eines Lokaloszillators VCO mit einer Oszillatorfrequenz $f_{LO}$ angespeist werden.

Der Lokaloszillator VCO ist mit der Eingangsträgerfrequenz nicht frequenz- und phasenstarr gekoppelt. Um einen Trägerfrequenz-Offset zwischen der Empfangsfrequenz $f_E$ und der Oszillatorfrequenz $f_{LO}$ möglichst klein zu halten, ist ein Nachstimmeingang für eine grobe Frequenzkorrektur am Lokaloszillator VCO vorgesehen. Die Nachstimmspannung wird in einer Offsetkorrektureinrichtung OKE ermittelt. Der Frequenzunterschied zwischen Empfangsfrequenz $f_E$ und Oszillatorfrequenz $f_{LO}$ sollte aber nicht mehr als 5 ppm betragen.

Nach den Mischern M liegt das Nutzsignal, von Rauschen und Nachbarkanalsignalen überlagert, im Basisband vor. Zwei laufzeitlineare Tiefpaßfilter TP bewirken die Hauptselektion des Empfängers. Sie enthalten Gleichspannungstrennkondensatoren zur Unterdrückung von Gleichspannungsanteilen des Nutzsignals und wirken daher wie breitbandige Bandpaßfilter. Die Verstärkung der einzelnen Filterstufen ist digital einstellbar, so daß auch hier ein Dynamikausgleich durchgeführt werden kann. Hinter den Filterstufen liegen Real- und Imaginärteil des Empfangssignals in bandbegrenzter, amplituden- und zeitkontinuierlicher Form vor.

Nach den Tiefpaßfiltern TP werden die Signale im Real- und Imaginär-Zweig durch Abtast-Halteglieder SH mit einem Systemtakt ST periodisch abgetastet und in zwei Analog/Digital-Wandlern AD digitalisiert. Durch den Dynamikausgleich am Vorverstärker VV und an den Tiefpässen- TP sind die Dynamikschwankungen auf einige dB beschränkt und eine Auflösung der Analog/Digital-Wandler AD von 5 - 8 Bit ausreichend. Der Systemtakt ST wird von einem Taktgenerator TG erzeugt und hat eine Frequenz von 8,8 MHz. Danach liegen Real- und Imaginärteil des Eingangssignals zu jedem Zeitpunkt als binäre Zahlenwerte vor. Die Datenrate beträgt 1,1 MBit/sek bei einem Datentakt DT von 1,1 MHz, womit durch den Systemtakt ST ein 8-faches Oversampling erzielt wird.

Da die empfangene Information als Winkeldifferenz zwischen Abtastzeitpunkten codiert ist, werden mit einer Umwertetabelle in Permanentspeichern ROM Real- und Imaginärteil in Betrag und Winkel eines komplexen Vektors umgerechnet. Die Zahlenwerte für Real- und Imaginärteil bilden die Datenadressen der Permanentspeicher ROM, Betragswert B und Winkelwert W erhält man am Datenausgang. Der Betragswert B wird zur Einstellung der Verstärkung im Vorverstärker VV und in den Tiefpaßfiltern TP der Hauptselektion verwendet. Die Winkelinformation wird so codiert, daß N Bit mit einem Wertevorrat von $2^N$ dem vollen Winkel von 360° entsprechen (siehe Tabelle 1). Diese Codierung erlaubt vorzeichenrichtige, binäre Winkeladdition und -subtraktion mit Zweierkomplement über 360° hinaus.

| Winkel | | | Binärcode |
|---|---|---|---|
| 0° | | | 0000 |
| +22,5° | | | 0001 |
| +90° | | | 0100 |
| +180° | = | -180° | 1000 |
| +270° | = | - 90° | 1100 |
| +337,5° | = | - 22,5° | 1110 |
| +360° | = | 0° | 0000 |

Tab. 1: Winkelcodierung mit 4 Bit (auszugsweise)

Ein Subtrahierer SB bildet die Differenz zwischen dem aktuellen Winkelwert W und dem in einem Zwischenspeicher ZS gespeicherten Winkelwert W des vorangegangenen Abtastzeitpunktes. Eine vom gewählten Modulationsverfahren abhängige Klassierung des Betrages der Winkeldifferenz $\Delta\varphi$ in Entscneidungsgebiete E (Tabelle 2) liefert dann demodulierte Empfangsdaten D, deren Abtastzeitpunkt in einer Justiereinrichtung JE ermittelt wird. Dazu ist ein Klassifikator K und ein Haltespeicher L mit dem Subtrahierer SB zu einem Decoder DC verbunden. Aus dem Haltespeicher L wird der Wert ausgewählt. Aufgrund der Entscheidungsgebiete E kann der Vektorempfänger von einem nachgeodneten Mikrocomputer selbsttätig auf unterschiedliche Modulationsverfahren umgestellt werden. Das ermöglicht den Aufbau eines Mehrnormengerätes.

| Modulationsverf. | Entscheidungsgebiete E | |
| --- | --- | --- |
| BAM, BPSK | $\Delta\varphi \leq +90°,$ | $\Delta\varphi > +90°$ |
| QAM, QPSK | $-45° \leq \Delta\varphi < +45°,$ | $+45° \leq \Delta\varphi < +135°$ |
| | $+135° \leq \Delta\varphi < +225°,$ | $-135° \leq \Delta\varphi < -45°$ |
| MSK, GMSK | $0° \leq \Delta\varphi < +180°,$ | $-180° \leq \Delta\varphi < 0°$ |

Tab. 2: Entscheidungsgebiet des Vektorempfängers für zwei- und vierstufige Modulationsverfahren

Damit durch den Klassifikator K eine richtige Zuordnung möglich ist, muß die Phasenverschiebung, die durch die Inkohärenz von Eingangssignal und Lokaloszillator VCO pro Bit entsteht, kleiner als der halbe Winkel eines Entscheidungsgebietes E sein. Daraus folgt die maximal zulässige Frequenzdifferenz $f_{O,max}$ zwischen Empfangssignal und Lokaloszillatorsignal zu

$$f_{O,max} = \frac{\Delta\varphi_E}{4.\pi.T_{bit}}$$

In der Gleichung bedeuten $\Delta\varphi_E$ den Winkel eines Entscheidungsgebietes E und $T_{bit}$ die Bitdauer, die der Reziprokwert des Datentaktes DT ist.

Aufgrund der Frequenzdifferenz zwischen Eingangsfrequenz $f_E$ und Oszillatorfrequenz $f_{LO}$ sind die Winkeldifferenzen

$$\Delta\varphi = \Delta\varphi_{bit} + 2.\pi.(f_E - f_{LO}).t$$

für Modulation mit positiver und negativer Phasenverschiebung $\Delta\varphi$ bit nicht symmetrisch. Durch die Offsetkorrektureinrichtung OKE wird aus der Differenz der Phasenhübe der Trägerfrequenz-Offset $\Delta f$ als

$$\Delta f = \frac{\Delta\varphi + - \Delta\varphi -}{2.\pi.T_{bit}}$$

errechnet. Bei bekannter Spannungsabhängigkeit der Frequenz des Lokaloszillators VCO wird ein Frequenzkorrektursignal als Nachstimmspannung abgeleitet.

Wie Fig. 2 zeigt, muß zu Beginn jeder Empfangssequenz ES eine Synchronisationsfolge zur Bestimmung des Abtastzeitpunktes gesendet werden. Diese wird durch ein kurzzeitiges Austasten des Sendesignals eingeleitet. Daraus ergibt sich die Zeitstruktur des Empfangssignals mit Austastzeit AZ, Synchronisationszeit SZ und Bitübertragungszeit BZ. Über welche Zeit der Abtastzeitpunkt dann gültig ist, ist durch die Stabilität des Sende- und des Empfangsdatentaktes, sowie die Feinheit der Zeitauflösung für die Abtastung innerhalb eines Bits gegeben. Die Anzahl N der gültig empfangenen Bits ergibt sich als

$$N = \frac{I}{2.OV.\Delta f_{takt,max}.T_{bit}},$$

wobei $\Delta f_{takt,max}$ die maximale Taktfrequenzdifferenz zwischen Sender und Empfänger und OV (Oversampling) die Zahl der möglichen Abtastzeitpunkte pro Bit ist. Nach maximal N Datenbits muß eine neuerliche Synchronisationsfolge gesendet werden, damit der Empfänger den Abtastzeitpunkt aktualisieren kann. Bei OV = 8 und einem auf 50 ppm genauen Datentakt ($\Delta f_{takt,max}$ = = $50.10^{-6}$) und $T_{bit}$ = $909,1.10^{-9}$ sec ergeben sich 1250 gültig empfangene Bits (N).

Für die linearen und nichtlinearen Modulationsverfahren werden verschiedene Synchronisationsmethoden zur Bestimmung des Abtastzeitpunktes verwendet. Bei den nichtlinearen Modulationsverfahren (MSK, GMSK), wie in Fig. 3 für MSK gezeigt, kann man durch Modulation mit einer, einer Datenfolge d(t) = +1,-1,+1, -1,+1... entsprechenden, Synchronisationsfolge SF einen periodischen Phasenhub PH erzeugen. Der Betrag des Vektors ist bei nichtlinearen Modulationsverfahren konstant (const. Einhüllende). Bei der Demodulation steigt der Phasenhub PHD in Folge des Trägerfrequenzoffsets stetig an. Durch 8-fache Überabtastung und Phasendifferenzbildung mit dem, um 1 Bit vorherliegenden Wert zu jedem Abtastzeitpunkt innerhalb eines Bits kann eine Phasendifferenz PD gebildet werden. Deren Winkelvorzeichenfunktion WVF entspricht der um $T_{bit}/2$ verschobenen Synchronisationsfolge SF. Durch Phasenvergleich mit dem Datentakt DT und zeitliche Mittelwertbildung kann daraus der Abtastzeitpunkt, auch bei verrauschten Eingangsverhältnissen, sehr genau bestimmt werden.

Bei den linearen Modulationsverfahren (BAM,BPSK,QAM,QPSK) kann man durch Modulation mit der Synchronisationsfolge SF einen datentaktperiodischen Nulldurchgang des Empfangssignals erzeugt, wie in Fig.

4 für lineare Amplitudenmodulation mit unterdrücktem Träger gezeigt ist. Es wird der Verlauf des Trägerfrequenz-Offsets Δf, sowie der Verlauf des Real- und Imaginärteiles RT, IT des Empfangssignals gezeigt. Der Betrag des Vektors ist bei linearen Modulationsverfahren variabel. Nach Bildung der Vorzeichenfunktion VZF des Real- und Imaginärteils RT, IT werden mittels digitaler Differentiation zum Zeitpunkt des Nulldurchgangs schmale Impulse erzeugt. Sie bilden eine Nullstellenpulsfolge NF. Durch Messung der zeitlichen Lage der Impulse relativ zum Systemtakt und Mittelwertbildung über einige Bits, erhält man auch bei verrauschten Empfangsverhältnissen den Abtastzeitpunkt mit hoher Zuverlässigkeit.

Die automatische Verstärkungsregelung ist ein in Digitaltechnik ausgeführter Regler R, gezeigt in Fig. 1. Er hat die Aufgabe, den im Betrieb schwankenden Signalpegel bei mittlerer Aussteuerung der Analog/Digital-Wandler AD auf einige dB konstant zu halten. Als Pegel-Istwert wird der im Permanentspeicher ROM gebildete Betragswert B in den Regler R eingelesen. Der Regler R muß so langsam arbeiten, daß er den kurzzeitigen Pegeleinbrüchen vor den Synchronisationszeiten nicht folgen kann. Zur Verringerung von Intermodulationsstörungen wird die, nach den Mischern M vorliegende, nicht bandbegrenzte Signalleistung als Parameter zur Aufteilung der Verstärkung auf die HF-Vorstufe und die Hauptselektionsstufen herangezogen. Der Parameter wird durch Betragsbildung des Empfangsvektors in einer Normiervorrichtung NV ermittelt.

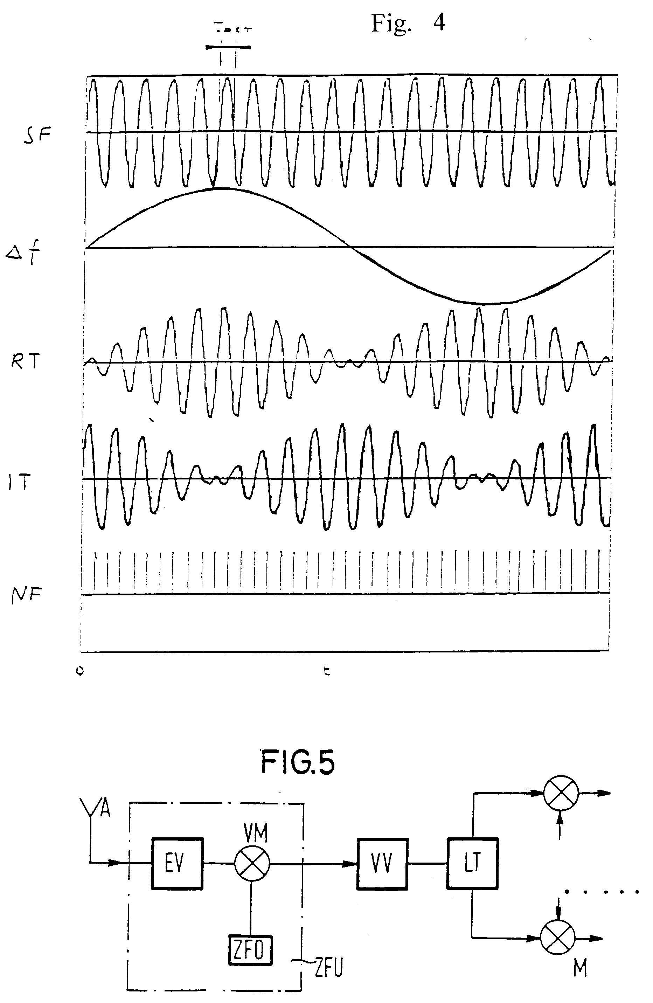

Fig. 5 zeigt das schematische Blockschaltbild eines heterodynen Vektorempfängers als zweites Ausführungsbeispiel. Er arbeitet wie der Vektorempfänger des ersten Ausführungsbeispieles mit inkohärenter Demodulation. Das über die Antenne A empfangene Signal wird über einen Zwischenfrequenzumsetzer ZFU von 60 GHz auf 2 GHz heruntergesetzt. Somit kann ein Vektorempfänger, der wie im ersten Ausführungsbeispiel aufgebaut ist, in Modultechnik für den Empfang von Satellitensignalen verwendet werden. Die Verarbeitung des Empfangssignals ab dem Vorverstärker VV bleibt gleich. Der Zwischenfrequenzumsetzer ZFU enthält einen Eingangsverstärker EV, dem ein Vormischer VM nachgeschaltet ist. Der Vormischer VM ist mit einem Zwischenfrequenzoszillator ZFO verbunden.

**Patentansprüche**

1.  Verfahren zum Umsetzen eines digital modulierten Empfangssignals aus dem Hochfrequenzbereich, wobei das als komplexer Vektor darstellbare Empfangssignal in mindestens einer Mischstufe inkohärent ins Basisband umgesetzt wird, **dadurch gekennzeichnet**, daß das Empfangssignal in einen zeit- und amplitudenkontinuierlichen Real- und Imaginärteil zerlegt wird, wobei die Phasendifferenz pro Bitdauer durch die inkohärente Umsetzung kleiner als die halbe, durch die Modulation pro Bit verursachte Phasenverschiebung gehalten wird, die Signalteile anschließend verstärkt, gefiltert und abgetastet werden, wobei innerhalb einer vorangehenden Synchronisationszeit (SZ) der Abtastzeitpunkt bestimmt wird, anschließend die Abtastsignale digitalisiert und die Abtastwerte als binäres Zahlenpaar für Betrag und Winkel des Vektors umgewertet werden, wobei der Betragswert (B) zur Verstärkungsregelung dient und aus der Differenz zweier aufeinanderfolgender Winkelwerte (W) nach Klassierung Empfangsdaten (D) rückgewonnen werden.

2.  Verfahren nach Anspruch 1, **dadurch gekennzeichnet**, daß ein Winkelwert (W) über eine Bitdauer zwischengespeichert, von dem folgenden im Zweierkomplement subtrahiert und aus einer vom verwendeten Modulationsverfahren abhängigen Klassierung des Ergebnisses die Empfangsdaten (D) rückgewonnen werden.

3.  Verfahren nach Anspruch 1 oder 2, **dadurch gekennzeichnet**, daß der Abtastzeitpunkt für den Winkelwert (W) eines linear modulierten Empfangssignals innerhalb einer Synchronisationszeit (SZ) vor der Übertragung gültiger Daten dadurch ermittelt wird, daß der Verlauf des Betrags des Empfangssignals mit einer Synchronisationsfolge (SF) moduliert und nach Umsetzen ins Basisband die Vorzeichenfunktion (VZF) gebildet und diese digital differenziert wird, wobei eine Nullstellenimpulsfolge (NF) gebildet, die zeitliche Lage der Impulse relativ zum Systemtakt (ST) gemessen und über mehrere Bits gemittelt wird.

4.  Verfahren nach Anspruch 1 oder 2, **dadurch gekennzeichnet**, daß der Abtastzeitpunkt für den Winkelwert (W) eines nichtlinear modulierten Empfangssignals innerhalb einer Synchronisationszeit (SZ) vor der Übertragung gültiger Daten dadurch ermittelt wird, daß der mit der Synchronisationsfolge (SF) winkelmodulierte Träger nach Umsetzung ins Basisband überabgetastet und daraus ein Phasenhub (PH) gewonnen wird, wobei aus diesem durch Differenzbildung über eine Bitdauer eine Phasendifferenz (PD) gebildet wird, deren Winkelvorzeichenfunktion (WVF) phasenmäßig mit dem Datentakt (DT) verglichen und die Phasenverschiebung über mehrere Bits gemittelt wird.

5. Empfänger für digital modulierte Signale in einem mobilen Kommunikationssystem, dessen Antenne (A) mit mindestens einer Mischstufe für das als komplexer Vektor darstellbare Empfangssignal verbunden ist, wobei der Mischstufe zwei Tiefpaßfilter (TP) nachgeordnet sind, die ausgangsseitig über je einen Analog/Digital-Wandler (AD) mit einem Umwerter verbunden sind, **dadurch gekennzeichnet**, daß die Tiefpaßfilter (TP) mit regelbarer Verstärkung ausgestattet sind, daß der Umwerter Mittel zur Bestimmung von Betrag und Winkel des Vektors des Empfangssignals aus dessen Real- und Imaginärteil enthält und zur Empfangsdatenrückgewinnung mit einem Decoder (DC) verbunden ist, der einen Klassifikator (K) enthält und daß eine Justiereinrichtung (JE) zur Ermittlung des Abtastzeitpunktes mit dem Umwerter und dem Decoder (DC) verbunden ist.

6. Empfänger nach Anspruch 5, **dadurch gekennzeichnet**, daß die Mischstufe als Quadraturdemodulator ausgebildet ist, der aus zwei Mischern (M) besteht, die mit einem Lokaloszillator (VCO) zur Speisung mit einem um 0°- und 90°-phasenverschobenen Oszillatorsignal verbunden sind und daß der Lokaloszillator (VCO) einen Nachstimmeingang aufweist, der mit einer Offsetkorrektureinrichtung (OKE) verbunden ist.

7. Empfänger nach Anspruch 5 oder 6, **dadurch gekennzeichnet**, daß ein Verstärkungsfaktor der Tiefpaßfilter (TP) digital einstellbar und der Umwerter zu dieser Regelung mit den Tiefpaßfiltern (TP) rückgekoppelt ist.

8. Empfänger nach einem der Ansprüche 5 bis 7, **dadurch gekennzeichnet**, daß die Tiefpaßfilter (TP) Gleichspannungstrennkondensatoren enthalten.

9. Empfänger nach einem der Ansprüche 5 bis 8, **dadurch gekennzeichnet**, daß der Umwerter aus zwei Permanentspeichern (ROM) besteht, deren Datenadressen durch die Zahlenwerte für Real- und Imaginärteil der Abtastwerte gebildet sind und daß Betrags- und Winkelwert (B,W) am Datenausgang der jeweiligen Permanentspeicher (ROM) anliegen.

10. Empfänger nach einem der Ansprüche 5 bis 9, **dadurch gekennzeichnet**, daß der Mischstufe mindestens ein Zwischenfrequenzumsetzer (ZFU) vorgeschaltet ist.

## Claims

1. Method of converting a digitally modulated reception signal from the radio-frequency range, in which the reception signal, which can be represented as a complex vector, is converted incoherently into the baseband at at least one mixing stage, characterized in that the reception signal is split into a real component and in imaginary component, continuous in time and amplitude, the phase difference per bit period due to the incoherent conversion being kept to less than half the phase shift caused by the modulation per bit, the signal components are subsequently amplified, filtered and sampled, the sampling time being determined within a preceding synchronization time (SZ), the sampled signals are subsequently digitized and the sampled values are value-converted as a pair of binary numbers for the magnitude and angle fo the vector, the magnitude value (B) serving for gain control and reception data (D) being recovered from the difference between two successive angle values (W) after classification.

2. Method according to Claim 1, characterized in that an angle value (W) is buffer-stored over a bit period, subtracted from the following value by twos complement and the reception data (D) recovered from a classification of the result dependent of the modulation method used.

3. Method according to Claim 1 or 2, characterized in that the sampling time for the angle value (W) of a linearly modulated reception signal is determined within a synchronization time (SZ) before the transmission of valid data by the variation of the magnitude of the reception signal being modulated with a synchronization sequence (SF) and, after conversion into a baseband, the sign function (VZF) formed and digitally differentiated, a zero pulse sequence (NF) being formed, the timing of the pulses measured in relation to the system clock (ST) and averaged over several bits.

4. Method according to Claim 1 or 2, characterized in that the sampling time for the angle value (W) of a non-linearly modulated reception signal is determined within a synchronization time (SZ) before the transmission of valid data by the carrier which has been angle-modulated with the synchronization sequence (SF) being oversampled after conversion into the baseband and from it a phase deviation (PH) obtained, from this a phase difference (PD) being formed by subtracting over a bit period, the angle sign function (WVF) of which phase difference is compared in terms of phase with the data clock (DT) and the phase shift averaged over several bits.

5. Receiver for digitally modulated signals in a mobile communication system, the antenna (A) of which is connected to at least one mixing stage for the reception signal, which can be represented as a complex vector, the mixing stage being followed by two low-pass filters (TP), which are connected on the output side via an analogue/digital converter (AD) in each case to a value converter, characterized in that the low-pass filters (TP) are provided with variable gain, in that the value converter includes means for determining the magnitude and angle of the vector of the reception signal from its real component and its imaginary component and is connected to a decoder (DC), which contains a classifier (K), for reception data recovery, and in that an adjusting device (JE) is connected to the value converter and the decoder (DC) for determining the sampling time.

6. Receiver according to Claim 5, characterized in that the mixing stage is designed as a quadrature demodulator, which comprises two mixers (M) which are connected to a local oscillator (VCO) for feeding with an oscillator signal phase-shifted by 0° and 90° and in that the local oscillator (VCO) has a tuning input, which is connected to an offset correction device (OKE).

7. Receiver according to Claim 5 or 6, characterized in that the gain factor of the low-pass filters (TP) can be digitally set and the value converter is coupled back to the low-pass filters (TP) for this control.

8. Receiver according to one of Claims 5 to 7, characterized in that the low-pass filters (TP) contain DC isolating capacitors.

9. Receiver according to one of Claims 5 to 8, characterized in that the value converter comprises two permanent memories (ROM), the data addresses of which are formed by the numerical values of the real component and the imaginary component of the sampled values and in that the magnitude value (B) and the angle value (W) are available at the data output of the respective permanent memories (ROM).

10. Receiver according to one of Claims 5 to 9, characterized in that the mixing stage is preceded by at least one intermediate-frequency converter (ZFU).

## Revendications

1. Procédé de conversion d'un signal haute fréquence de réception modulé numériquement, le signal de réception, que l'on peut représenter par un vecteur complexe, étant converti de façon non cohérente en bande de base dans au moins un étage mélangeur, caractérisé en ce que l'on décompose le signal de réception en une partie réelle et en une partie imaginaire continues en temps et en amplitude, la différence de phase pour la durée de chaque bit étant maintenue par la conversion non cohérente, plus petite que la moitié du déphasage provoqué par la modulation pour chaque bit, les parties de signaux étant ensuite amplifiées, filtrées et échantillonnées, l'instant d'échantillonnage étant déterminé dans un intervalle (SZ) de temps de synchronisation précédent, les signaux échantillonnés étant ensuite numérisés et les valeurs échantillonnées étant transformées en une paire de nombres formée du module et de l'angle du vecteur, la valeur (B) du module servant au réglage d'amplification et étant réobtenue à partir de la différence entre deux valeurs (W) d'angle se suivant après classement des données (D) de réception.

2. Procédé suivant la revendication 1, caractérisé en ce que l'on mémorise temporairement une valeur (W) d'angle pendant une durée de bits, on la soustrait de la valeur suivante en complément à deux et on réobtient les données (D) de réception à partir d'un classement du résultat dépendant du procédé de modulation utilisé.

3. Procédé suivant la revendication 1 ou 2, caractérisé en ce que l'on détermine l'instant d'échantillonnage pour la valeur (W) d'angle d'un signal de réception modulé linéairement pendant un intervalle (SZ) de temps de synchronisation avant la transmission de données admissibles, en modulant la courbe du module du signal de réception par un train (SF) de synchronisation et en formant la fonction (VZF) de signe après conversion en bande de base et en différenciant celle-ci numériquement, un train (NF) d'impulsions de valeurs d'annulation étant formé, la position dans le temps des impulsions par rapport à la cadence (ST) de système étant mesurée et moyennée sur plusieurs bits.

4. Procédé suivant la revendication 1 ou 2, caractérisé en ce que l'on détermine l'instant d'échantillonnage pour la valeur (W) d'angle d'un signal de réception modulé de façon non linéaire, pendant un intervalle (SZ) de temps de synchronisation avant la transmission de données admissibles, en suréchantillonnant après conversion en bande de base la porteuse modulée en angle par le train (SF) de synchronisation et en obtenant à partir de cette opération une déviation (PH) de phase, une différence (PD) de phase étant obtenue à partir de cette déviation de phase en formant une différence sur une durée de bit, la fonction (WVF) de signe angulaire de cette différence de phase étant comparée en ce qui concerne la phase à la cadence (DT) de données et le déphasage étant moyenné sur plusieurs bits.

5. Récepteur de signaux modulés numériquement dans un système de communication mobile, dont l'antenne (A) est reliée à au moins un étage mélangeur pour le signal de réception, que l'on peut représenter par un vecteur complexe, deux filtres passe-bas (TP) étant disposés en aval de l'étage mélangeur et étant chacun reliés côté sortie par l'intermédiaire d'un convertisseur (AD) analogique/numérique à un convertisseur de coordonnées, caractérisé en ce que les filtres (TP) passe-bas ont un gain réglable, le convertisseur de coordonnées comprend des moyens pour déterminer le module et l'angle du vecteur du signal de réception à partir de ses parties réelle et imaginaire et est relié à un décodeur (DC) pour reconstituer les données de réception, lequel comprend un dispositif (K) de classement et un dispositif (JE) d'ajustage destiné à déterminer l'instant d'échantillonnage est relié au convertisseur de coordonnées et au décodeur (DC).

6. Récepteur suivant la revendication 5, caractérisé en ce que l'étage mélangeur est constitué en tant que démodulateur de déphasage en quadrature formé de deux mélangeurs (M), qui sont reliés à un oscillateur (VCO) local fournissant des signaux d'oscillateur déphasés de 0° et 90° et l'oscillateur (VCO) local comporte une entrée de correction, qui est reliée à un dispositif (OKE) de correction de décalage.

7. Récepteur suivant la revendication 5 ou 6, caractérisé en ce que l'on peut régler numériquement un gain des filtres (TP) passe-bas et le convertisseur de coordonnées est monté en rétroaction par rapport aux filtres (TP) passe-bas pour effectuer ce réglage.

8. Récepteur suivant l'une des revendications 5 à 7, caractérisé en ce que les filtres (TP) passe-bas comprennent des condensateurs de découplage à la tension continue.

9. Récepteur suivant l'une des revendications 5 à 8, caractérisé en ce que le convertisseur de coordonnées est constitué de deux mémoires mortes (ROM), dont les adresses de données sont formées par les valeurs numériques pour la partie réelle et la partie imaginaire des valeurs d'échantillonnage et la valeur du module et la valeur de la phase (B, W) sont disponibles à la sortie de données des mémoires mortes (ROM) correspondantes.

10. Récepteur suivant l'une des revendications 5 à 9, caractérisé en ce qu'au moins un convertisseur (ZFU) à fréquence intermédiaire est branché en amont de l'étage mélangeur.

FIG.1

## FIG.2

## FIG. 3

Fig. 4

FIG.5

12